# EUROPÄISCHE PATENTANMELDUNG

(11) **EP 1 768 322 A1**
(43) Veröffentlichungstag der Anmeldung: **28.03.2007**
(21) Anmeldenummer: 05020624.2
(22) Anmeldetag: 22.09.2005
(51) Int. Cl.: H04L 12/56

(54) **Verfahren zur Reservierung von Bandbreite in einer Netzresource in einem Kommunikationsnetzwerk**

(71) Anmelder: SIEMENS AKTIENGESELLSCHAFT, 80333 München (DE)
(72) Erfinder: Frantz, Michael, 81737 München (DE)
(74) Vertreter: Fischer, Michael

(57) **Zusammenfassung**

Es wird ein Verfahren zur Reservierung von Bandbreite in einer Netzresource in einem Kommunikationsnetzwerk angegeben, bei dem für einen Service ein Übertragungskanal (A1-A3,B1-B3,C1,C2,D1-D3,E1,F1,G1,H1,I1) verwaltet wird, wobei die Bandbreite für jede Netzresource des Übertragungskanals in Abhängigkeit eines statistischen Wertes variiert wird.

## Beschreibung

Es wird ein Verfahren zur Reservierung von Bandbreite in einem Kommunikationsnetzwerk, insbesondere in einem Ethernet basierten Netzwerk, angegeben. Es wird insbesondere ein Verfahren zur Reservierung von Bandbreite in einem Netzresource, wie beispielsweise einem Netzwerklink, angegeben.

Um für Dienste, die über ein Ethernet basiertes Kommunikationsnetz realisiert werden, die gleiche Qualität bzw. Verfügbarkeit garantieren zu können wie beispielsweise für ATM (Asynchronous Transfer Mode ein Netzwerkprotokoll, welches Daten in kleine, mit einer fixen Größe gekennzeichneten Zellen kodiert) oder SDH (Synchronous Digital Hierarchy-- ein Standard zur digital Kommunikation über optische Faser) basierte Übertragungsnetze, ist es erforderlich, die Bandbreite des Netzes mittels eines Verwaltungssystems effektiv zu verwalten.

Bei der Verwaltung sollten beispielsweise Überbuchungen von verfügbarer Bandbreite im Netz für Dienste, die eine garantierte Bandbreite erfordern, vermieden werden. Dabei kann es sich um Services eines Dienstes handeln, die zu jedem Zeitpunkt übertragbar sein sollen, besonders in Notfällen, wo beispielsweise in die Steuerung eines Geräts eingegriffen werden muss.

Die Verwaltung sollte Services berücksichtigen, die unterschiedliche Bandbreiten für die verschiedenen von einem Service genutzten Netzresourcen benötigen. Eine Netzresource umfasst dabei Netzelemente und Netzwerklinks. Sie kann als Mittel zur Übertragung von Daten in einem Netzwerk verstanden werden.

Unter dem Begriff "Dienst" wird ein Dienst für einen Kunden, wie beispielsweise TV, VoIP (Voice over Internet Protocol), Internet Zugang oder Video on Demand, d.h., Video nach Nachfrage, verstanden.

Unter dem Begriff "Service" wird ein Objekt in einem Verwaltungssystem verstanden, beispielsweise ein softwaretechnisches Objekt, das einen Dienst für einen oder mehreren Kunden umsetzt.

Unter dem Begriff "Netzwerklink" bzw. "Link" wird eine physikalische oder logische Verbindung zwischen zwei Ports unterschiedlicher oder des gleichen Netzwerkelements verstanden. Ein Beispiel eines Netzwerkelements ist dabei eine Switch bzw. ein Schalter. Beispiele eines Schalters wären eine sogenannte Bridge oder DSLAM (Digital Subscriber Line Access Multiplier), welches ein Multiplexer ist, der Kunden Zugang zu DSL Diensten mittels verdrillten Kupferkabeln ermöglicht.

Eine zu lösende Aufgabe besteht darin, Mittel oder verfahren anzugeben, die es ermöglichen, die in einem Kommunikationsnetz verfügbare Bandbreite besser auszunutzen.

Es wird ein Verfahren angegeben, bei dem in einem Kommunikationsnetzwerk für einen Service ein Übertragungskanal verwaltet wird, wobei die Bandbreite für jede Resource des Übertragungskanals in Abhängigkeit eines statistischen Wertes variiert wird.

Die Resource umfasst dabei vorzugsweise einen Netzwerklink. Der statistische Wert umfasst vorzugsweise die Anzahl der Nutzer des Services. Ein Beispiel eines Nutzers ist ein Kunde, der einen Service benutzt oder benutzen könnte.

Auch wird ein Netzwerkverwaltungssystem angegeben, welches einen an das Kommunikationsnetzwerk angeschlossenen Netzkapazitätsregler aufweist, der von einem Steuerungsprogramm gesteuert wird und anhand dessen das genannte Verfahren ausgeführt werden kann.

Mit dem genannten verfahren bzw. dem Netzwerkverwaltungssystem ergibt sich der Vorteil, dass eine dynamische Bandbreitenreservierung, beispielsweise im Gegensatz zu einer statischen Reservierung, ermöglicht wird.

Mit einem Netzverwaltungssystem, welches das genannte Verfahren zur Reservierung von Bandbreite in einem Netzwerklink ausführt, ergibt sich der weitere Vorteil dass Netzwerklinks zwischen einzelne Netzwerkelemente (point to point), zwischen einem Netzwerkelement und mehreren Netzwerkelementen (point to multipoint) und zwischen zwei Gruppen von mehreren Netzwerkelementen (multipoint to multipoint) mit nicht linearer, d.h., mit unterschiedlicher Bandbreite für alle an einem Service beteiligten Netzkapazitäten definiert und verwaltet werden können. Es sind also keine aufwendigen Bandbreitenkonfigurationen für die summe aller beteiligten Links im Netz erforderlich.

Ein weiterer Vorteil besteht darin, dass die Bandbreiten beliebig gestaffelt werden können und nicht in vorgegebenen Bandbreitenschritten verwaltet werden müssen.

Gemäß einer Ausführungsform des Verfahrens wird zur Reservierung von Bandbreite für einen Service:
- die zu erwartende Anzahl von Nutzer, die das Netz benutzen, ermittelt,
- die für den Service benötigte Bandbreite mit der Anzahl der zu erwartenden Nutzer multipliziert um einen Bandbreitenwert zu erhalten,
- die Bandbreite für jeden Netzwerklink mit diesem Bandbreitenwert für den Service reserviert.

Dabei kann die Bandbreite für einen Service pro Netzwerklink unterschiedlich sein.

Gemäß einer weiteren Ausführungsform des Verfahrens wird die statistisch ermittelte Nutzerzahl in Abhängigkeit von der Anzahl der maximal möglichen Nutzern für die Berechnung der Bandbreite berücksichtigt.

Es ist günstig, wenn der Bandbreitenwert nach der Formel (Nₖ × D) × (N_{KC}/ N_{K}) berechnet wird, wobei
- N_{K} die Anzahl der für ein Service registrierten Nutzern ist,
- D die für den Service benötigte Bandbreite ist,
- N_{Kc} die tatsächlich zu erwartende Anzahl von Nutzern, welche den Service gleichzeitig benutzen, ist.

Alternativ kann der Bandbreitenwert nach der Formel (N_{K} × D) × (A) berechnet werden, wobei
- N_{K} die Anzahl der für ein Service registrierten Nutzer ist,
- D die für den Service benötigte Bandbreite ist,
- A ein Reduktionsfaktor ist.

Der Reduktionsfaktor kann in Abhängigkeit der zu erwartenden Anzahl von Nutzern gebildet werden.

Für die Bereitstellung von Bandbreite in einem gesamten Netzwerk kann der Bandbreitenwert für mehrere zusammenhängende für einen Service genutzten Netzwerklinks zusammen ermittelt und bereitgestellt werden.

Besonders günstig ist es, wenn der Bandbreitenwert für Netzwerklinks in einem VLAN ermittelt und bereitgestellt wird.

Gemäß einer weiteren Ausführungsform kann die Route bzw. können die Route(n), für die bestimmte Bandbreiten reserviert wurden und durch die der Service ermittelt wird, durch die Konfiguration eines VLANs im Netz definiert werden. Damit wird ein logischer Bereich im Netz definiert, der exklusiv durch Netzwerklinks mit optimierten Bandbreitenreservierungen gekennzeichnet ist.

Im Falle, dass das Netzwerk alternative, sogenannte "protected" Routen aufweist, kann die Bandbreite für eine 1:n Sicherung reserviert werden. Alternative Routen sind solche, die aktiviert werden wenn ein bestehender Übertragungskanal defekt ist, sodass der Datenverkehr mittels dieser alternativen Route umgeleitet wird. Die Zahl n steht dabei für die Anzahl der möglichen alternativen Routen, welche beispielsweise mittels STP (Spanning Tree Protocol) ermittelbar sind. Es werden also in Abhängigkeit der Anzahl der alternativen Routen auf einem Link Bandbreite nur einmal oder in reduzierter Form reserviert.

Die beschriebenen Gegenstände werden anhand der folgenden Figuren und Ausführungsbeispiele näher erläutert.

Dabei zeigt:
- Figur 1: ein Netzwerk, bei dem in unterschiedlichen Links unterschiedliche physikalische Bandbreiten zur Verfügung stehen
- Figur 2: ein Netzwerk gemäß Figur 1, mit einer nicht linearen Verteilung der für einen Service reservierten Bandbreite,
- Figur 3: ein Netzwerk gemäß Figur 1, mit einer zweiten Verteilung der für einen Service reservierten Bandbreite,
- Figur 4: ein alternatives Netzwerk, dessen Pfad mit VLAN definiert wurde und unterschiedliche Bandbreiten für einen e2e-Service pro Netzlink reserviert.

In Kommunikationsnetzen kann Bandbreite für ein Service reserviert werden, der durch einen Netzkapazitätsregler verwaltet werden kann. Dabei kann angenommen werden, dass maximal eine bestimmte Anzahl von Kunden N_{Ke}, beispielsweise 50% der für den Dienst registrierten Kunden N_{K}, an einem Endgerät den Service tatsächlich nutzen. Dementsprechend kann Bandbreite, beispielsweise auf den Links zwischen zwei Netzwerkelementen oder Schaltern, im Netz reserviert werden.

Ein Netzkapazitätsregler wird in gängiger Fachsprache auch als Resource Controller bezeichnet, der die Bandbreiten verwaltet, die für einen Service im Verwaltungssystem vorreserviert wurden. Es kann sich dabei um eine planerische Vorreservierung handeln, welche unter anderem berücksichtigt, wie viele Kunden den Service gleichzeitig nutzen können. Eine Überbuchung der vorreservierten Bandbreite ist dabei in der Regel nicht möglich bzw. zugelassen. Im Verwaltungssystem sind die verwalteten Services als auch die vom Netzkapazitätsregler vorreservierte Bandbreiten sichtbar.

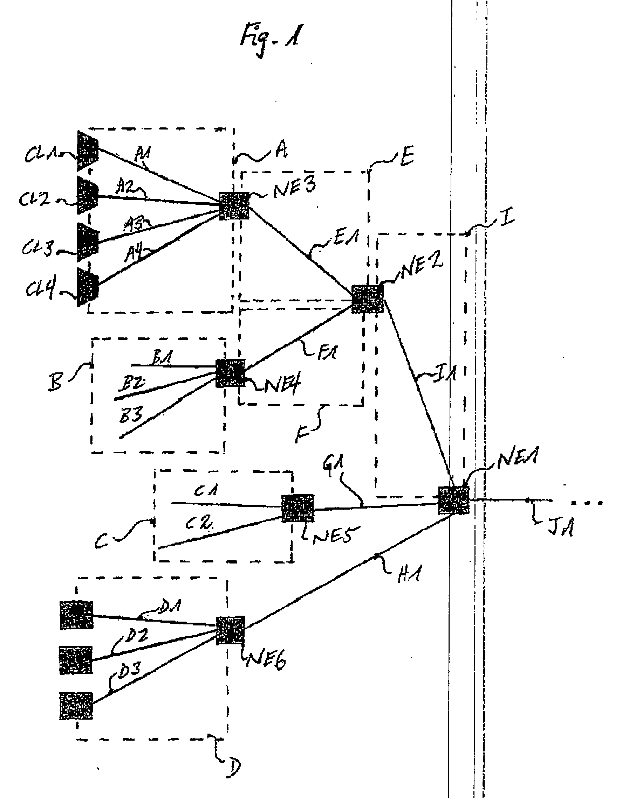

Figur 1 zeigt zusammen mit der folgenden Beschreibung wie für die Links A1 bis JI, die zusammen den Netzwerkverkehr aufsammeln, Bandbreite reserviert wird, die sich aus der Summe der Bandbreiten zu den Endgeräten ergibt.

Im gestrichelten Kasten A befinden sich zwischen einem Netzwerkelement NE3 und mehreren Endgeräten CL1 bis CL4 insgesamt 4 Links A1 bis A4. Die Endgeräte CL1 bis CL4 versorgen jeweils mehrere Kunden, welche beispielsweise über mobile Empfangsgeräte oder einen Rechner verfügen.

Beispielsweise soll CL1 für 200 Kunden, CL2 für 160 Kunden, CL3 für 200 Kunden und CL4 für 240 Kunden einen Service anbieten. Sollte für den Service bzw. für den Anschluss eines Kunden eine Übertragungsrate von 5 Mbps nötig sein, und wird davon ausgegangen, dass jeweils nur 50% der Kunden tatsächlich zum gleichen Zeitpunkt den Service verlangen bzw. herunterladen oder benutzen, wäre für den Link Al, der zwischen CL1 und NE3 angeordnet ist, eine Bandbreite von 500 Mbps nötig. Diese zahl ergibt sich aus der folgenden Berechnung: Anzahl der Kunden (Nₖ) × benötigte Bandbreite für den Service (D) × tatsächlich den Service benutzende Kunden in Prozent (N_{K} / N_{Ke}). Für A1 ergibt dies (200 × 5Mbps) × 50% = 500 Mbps. Wenn die Bandbreiten der übrigen Links A2 bis A4 zwischen den Endgeräten und dem Netzwerkelement NF3 aufsummiert werden, ergibt sich eine gesamte Bandbreite von 2 GB aus dem mit dem gestrichelten Kasten gekennzeichneten Bereich A.

In der Figur sind weitere Links B1 bis B3 für den aufsummierten Bereich B, Links C1 und C2 für den aufsummierten Bereich C und Links D1 bis D3 für den aufsummierten Bereich D vorhanden. Den Links werden vom Service beispielhaft folgende Bandbreiten zugeordnet:

| | | | | | |
|---|---|---|---|---|---|
| B1: | 200 Mbps | C1: | 800 Mbps | D1: | 500 Mbps |
| B2: | 400 Mbps | C2: | 400 Mbps | D2: | 400 Mbps |
| B3: | 200 Mbps | | | D3: | 400 Mbps. |

Im Bereich I kommen nun die aufsummierten Bandbreiten von den Bereichen E und F bzw. A und B zusammen. Gemäß der oben genannten Berechnung ergibt dies für den Bereich I bzw. für den Link I1 eine benötigte Bandbreite von 2,8 GB.

Wenn nun die Bandbreiten der übrigen Links C1 bis D3 aufsummiert werden und der Bandbreite von I1 (2,8 GB) hinzuaddiert werden, ergibt sich eine benötigte Bandbreite im Link J1 von insgesamt 5,2 GB.

Durch diese Summenbildung ergibt sich eine immer größere Bandbreite in den aufsummierten Links, die einen großen Anteil der Bandbreite benötigt, die ein Link zur Verfügung stellt. Dadurch bleibt unter Umständen keine Bandbreite für andere Service übrig. Zudem ist es möglich, dass die Links, die den aufsummierten Verkehr übertragen, die erforderliche Bandbreite nicht bereitstellen können, da die Summe der aufsummierten Bandbreiten, wie beispielsweise im Link I1, größer ist, als die verfügbare Bandbreite.

Ein Verfahren welches mit dieser Einschränkung umgeht besteht darin, die Bandbreiten der Links in nichtlinearer Weise gezielt zu setzen, um Bandbreite zu sparen. Die reservierten Netzresourcen werden also theoretisch überbucht.

In einem Netz kann es außerdem nötig sein, einen Service bereitzustellen, für den verschiedene Bandbreiten für die unterschiedlichen Zweige bzw, Links des Services erforderlich sind, wie z.B. bei TV-Diensten. Die erforderlichen Bandbreiten können dabei von der Anzahl der Kanäle abhängen, die regional angeboten werden und daher unterschiedlich sein können. Die einzelnen TV-Kanäle werden soweit als möglich auf den verschiedenen Routen des Service nur einmal übertragen, d.h., der Multicast des Signals erfolgt in den verteilenden Netzwerkelementen. Dadurch ergibt sich für die verschiedenen Netzkapazitäten eine unterschiedliche Brandbreitenbelegung in Abhängigkeit von den Kanälen die für einen Zweig des Services bereitgestellt wurden.

Obwohl diese Verfahren wegen der einfachen Berechenbar- und Ausführbarkeit günstig sind, führt die Aufsummierung der festgesetzten Bandbreiten von einem Nutzerende A zu einem Anbieterende Z zu einer gegebenenfalls nicht erfüllbaren Bandbreitenanforderung. Im Falle, dass die Bandbreite in einer optimierten Form erfolgen muss, wie beispielsweise um Bandbreite zu sparen oder bei geringer Kapazität, ist es möglich, die Bandbreiten pro Link einzeln anhand eines Operators, einer für diesen Zweck eingestellten Steuerung oder anhand eines geeigneten Programms zu berechnen. Die Übertragungskapazität des Übertragungsrxetzes wird also im Einzelnen verwaltet. Dies kann, insbesondere für größere Netzwerke, einen relativ großen Aufwand zur Folge haben.

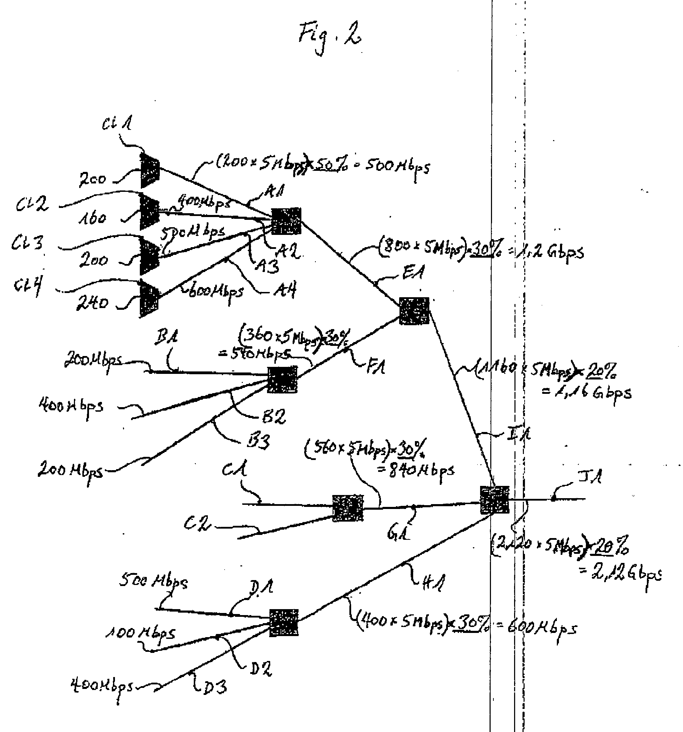

In Figur 2 versorgen die Endpunkte CL1 bis CL4 des Netzwerks auf der Nutzerseite die gleiche Anzahl von Kunden, wie im vorherigen Beispiel (CL1 = 200 Kunden, CL2 = 160 Kunden, CL3 = 200 Kunden und CL4 = 240 Kunden), wo die Bandbreiten linear aufsummiert wurden. Gemäß dieses Ausführungsbeispiels wird die zur Verfügung zu stellende Bandbreite aber in Abhängigkeit der Anzahl der Kunden, die zum gleichen Zeitpunkt einen Service nutzen dürfen, ermittelt. Die Bandbreiten der jeweiligen Links werden in dieser Figur direkt angezeigt. Im Gegensatz zum vorherigen Beispiel werden mehrere Reduktionsfaktoren A in Abhängigkeit der Anzahl der Kunden verwendet:
- 0 bis 300 Kunden = 50%
- 301 bis 1000 Kunden = 30%
- 1001 bis 3000 Kunden = 20%
- 3001 bis 4000 Kunden = 15%

Zur Verdeutlichung sind die Reduktionsfaktoren A in der Figur unterstrichen. Der Reduktionsfaktor bezieht sich also auf die tatsächlich zu erwartende Anzahl von den Service nutzenden Kunden.

Wie im vorherigen Beispiel werden pro Dienst 5 Mbps benötigt; dieser Wert bleibt jedoch konfigurierbar. Im Bereich A sind zusammen 800 Kunden mit einem Service zu versorgen, sodass sich gemäß der genannten Formel im gestrichelt eingekastelten Bereich A unter Berücksichtigung des gestaffelten Reduktionsfaktors eine Bandbreite von 800 × 5Mbps × 30% = 1,2 Gbps im Link E1 bzw. im Bereich E ergibt. Im Bereich B kommen dagegen 360 Kunden zusammen, welches gemäß 360 × 5 Mbps × 30% eine Bandbreite von 540 Mbps für den Link Fl bzw. für den Bereich F ergibt. Wenn die Bereiche E und F addiert werden, ergibt sich eine Summe von 1160 zu versorgende Kunden, welches zu einer benötigten Bandbreite im Link I1 gemäß 1160 × 5Mbps × 20% von 1,16 Gbps führt. Hier wurde beispielsweise ein Reduktionsfaktor A von 20% benutzt, welches bedeutet, dass bei einer Last von 1160 möglichen Kunden tatsächlich nur 20% den Service benutzen. Wenn sich gemäß analoger Berechnung für die Links G1 und H1 benötigte Bandbreiten von jeweils 840 Mbps und 600 Mbps ergeben bzw. in den Bereichen C und D zusammen 1060 zu versorgende Kunden ergeben, bedeutet dies für den Link J1 eine benötigte Bandbreite von 2120 × 5Mbps × 20% = 2,12 Gbps. Mit dieser letzten Berechnung ergibt sich ein weiteres Beispiel, wo ein Reduktionsfaktor von 20% entsprechend der tatsächlich zur erwartenden Kundenlast verwendet wurde.

Der Reduktionsfaktor A beruht also auf der Annahme dass das statistische Mittel der gleichzeitig einen Service nutzenden Kunden sinkt, je mehr Kunden über einen Link mit Daten versorgt werden, d.h., die Wahrscheinlichkeit, dass bei zunehmender Anzahl von Kunden, diese gleichzeitig den gleichen Service benutzen, gering ist. Unter Verwendung dieses Ansatzes wird auf dynamischer Art und Weise die bereitzustellende Bandbreite im Netz reduziert. Dadurch ergibt sich wiederum der Vorteil, dass mehr Kunden gleichzeitig ein Service benutzen können bzw. ein Netzanbieter ein Dienst für mehr Kunden anbieten kann.

Obwohl in diesem Ausführungsbeispiel die Reduktionsfaktoren als festgesetzt dargestellt sind, können sie konfigurierbar sein, beispielsweise anhand eines geeigneten Programmprodukts, welches einen geeigneten Reduktionsfaktor in Abhängigkeit der Anzahl der zu versorgenden Kunden ermittelt.

Das hier vorgestellte Ausführungsbeispiel ist besonders zur Unterstützung von Video on Demand im Netzwerk geeignet.

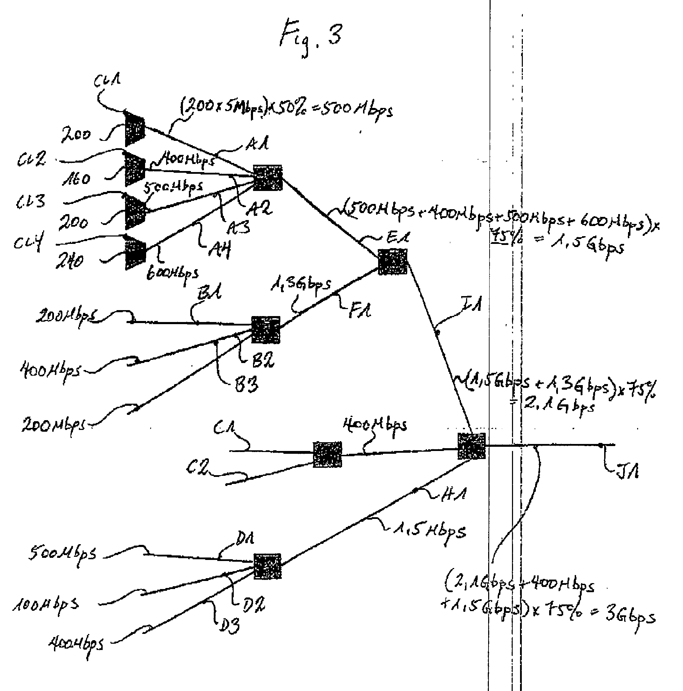

Figur 3 zeigt ein drittes Ausführungsbeispiel, bei dem die benötigte Bandbreite in den Sektoren A, B, C und D., d.h., für die unmittelbar mit den Kunden verbundenen Links A1 bis A4, B1 bis B3, C1 und C2 sowie D1 bis D3 in Abhängigkeit der Anzahl der Kunden, die ein Service benutzen dürfen, beispielsweise 50%, ermittelt wird. Das würde bedeuten, dass für die Links A1 bis A4 jeweils Bandbreiten von 500, 400, 500 und 600 Mbps reserviert werden, ein Ergebnis aus der Berechnung: Anzahl der Kunden × 5Mbps × 50%.

Für die relativ zu den Kunden entfernteren Sektoren E und F wird dagegen die bereitzustellende Bandbreite in Abhängigkeit eines Reduktionsfaktors, hier A = 75%, ermittelt. Somit ergibt sich beispielsweise für den Link E1 eine Bandbreitenreservierung von 1,5 Gbps, nach der Berechnung (500 Mbps + 400 Mbps + 500 Mbps + 600 Mbps) × 75%. Diese Formel wäre ebenfalls für die Links I1 und J1 anzuwenden, sodass für Link I1 2,1 Gbps und für Link J1 3 Gbps bereitgestellt werden würden. Der Reduktionsfaktor kann also auf einen Wert festgelegt sein und ändert sich nicht in Abhängigkeit der Anzahl den Service nutzender Kunden.

In diesem Ausführungsbeispiel wird also die Summe der Bandbreite aus den aufsammelnden Links gebildet und mit dem Reduktionsfaktor multipliziert. Folgende Daten können dabei von einem Programm oder von einem Operator eingegeben werden:
- Bandbreite, die ein Service benötigt,
- angenommene Anzahl der Kunden die den Service durch einen ersten Link gleichzeitig nutzen, wie zum Beispiel 50%,
- Reduktionsfaktor der zu reservierenden Bandbreite für die aufsammelnden Links. Es handelt sich um einen Wert in Prozent, um den die Bandbreite in den aufsammelnden Links reduziert werden soll. Es kann ein fixer Wert zwischen 1% und 100% eingegeben werden, der für alle aufsummierenden Links verwendet wird. Der Defaultwert liegt bei 100%, welches keine Reduzierung bedeuten würde.

Die berechneten Bandbreiten werden im Verwaltungssystem für diesen Service reserviert, d.h., sie können für andere Services als nicht verfügbar gestaltet sein, und zwar unabhängig davon, ob die Bandbreiten für diesen Service für die Dienste zu einem gegebenen Zeitpunkt im Netz genutzt werden oder nicht.

Das Verfahren ist zur Steuerung von Ethernet Netzen geeignet, bei denen Teile der verfügbaren Kapazität durch einen externen Netzkapazitätsregler verwaltet werden.

Im Falle dass ein Fernsehservice dem Kunden zur Verfügung gestellt werden soll, kann das verwaltungssystem durch Auswertung der Multicastgruppen im Netzwerkelement erkennen, wie viele TV-Kanäle auf einem Link übertragen werden. Diese Information wird für die Bereitstellung von ausreichender Bandbreite im Netz verwendet.

Gemäß eines weiteren Ausführungsbeispiels ist ein Verfahren vorgesehen, bei dem die Bandbreite in den aufsammelnden Links um einen individuellen Faktor reduzierbar ist. Dabei wird eine individuelle Formel definiert, beispielsweise von einem Programm mit einer geeigneten Wissensbasis wie z.B. eine Datenbank. Das Programm könnte darauf beruhen, dass die eine berechnete, bereitzustellende Bandbreite auf einen Wert größer als Null für alle Netzresourcen überprüft wird. Weitere Vorgehensweisen sind denkbar, wie z.B. die Quersumme des Reduktionsfaktors aus den aufgesammelten Links mit einem weiteren Faktor zu multiplizieren um die zu reservierende Bandbreite nochmals zu reduzieren. Alternativ kann ein Reduktionsfaktor in Abhängigkeit von der physikalischen Bandbreite eines Links ermittelt werden. Dieser kann linear oder nicht linear sein.

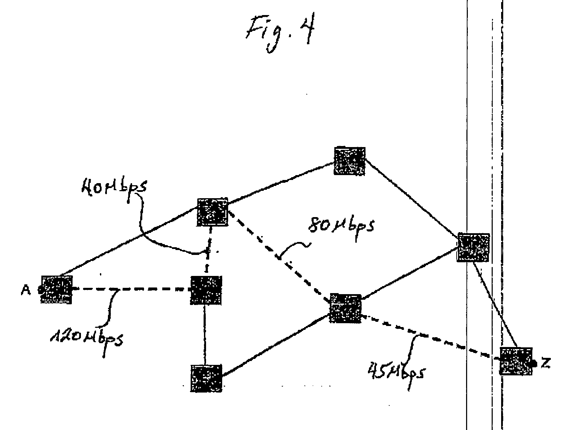

Figur 4 zeigt wie eine Verbesserung der oben genannten Verfahren darin besteht, dass Services für Dienste in einem Verwaltungssystem geschaltet werden, die durch die Konfiguration von VLANs (Virtual Local Area Network) Routen für die Services definieren. Unter dem Begriff VLAN wird dabei ein logisch unabhängiges Netzwerk verstanden, welches Teil eines Netzwerks bildet und eine bestimmte MAC (Media Access Control) Adresse erhält. Für Netzresourcen, die durch eine Route bzw. einem Pfad bestimmt werden, wird die für den Service erforderliche Bandbreite im Verwaltungssystem reserviert. Durch die Reservierung von Bandbreiten für die Netzwerklinks in einem VLAN wird eine Zone gebildet, durch die ein Service nur für registrierte Kunden eines Dienstes übertragen werden kann. Der VLAN-Bereich kann mittels unterschiedlicher Protokolle geschaltet sein, wie beispielsweise mittels STP oder MSTP (Multiple Spanning Tree Protocol). Der MSTP Protokoll schlägt alternative Routen in einer Umgebung von mehreren VLANs vor, die verwendet werden, wenn ein Link oder ein Netzwerkelement defekt ist. Auch für Links solcher Routen können anhand der genannten Verfahren Bandbreiten variabel reserviert werden.

Bezugszeichenliste
- A bis J: Bereiche aufsummierter Bandbreite
- CL1 bis CL4: Endgeräte
- A1 bis J1: Links
- NE1 bis NE6: Netzwerkelemente

## Patentansprüche

1. Verfahren zur Reservierung von Bandbreite in einer Netzresource in einem Kommunikationsnetzwerk, bei dem für einen Service ein Übertragungskanal verwaltet wird, wobei die Bandbreite für jede Netzresource des Übertragungskanals in Abhängigkeit eines statistischen Wertes variiert wird.

2. Verfahren nach Anspruch 1, bei dem
- die zu erwartende Anzahl von Nutzer des Services, die die Netzresource benutzen, ermittelt wird,
- die für den Service benötigte Bandbreite mit der Anzahl der zu erwartenden Nutzer multipliziert wird um einen Bandbreitenwert zu erhalten,
- die Netzresource mit diesem Bandbreitenwert für den Service reserviert wird.

3. Verfahren nach Anspruch 1, bei dem der Bandbreitenwert nach der Formel (N_{K} × D) × (N_{Ke}/ N_{K}) berechnet wird, wobei
- N_{K} die Anzahl der für ein Service registrierten Nutzern ist,
- D die für den Service benötigte Bandbreite ist,
- N_{Ke} die tatsächlich zu erwartende Anzahl von Nutzern, welche den Service gleichzeitig benutzen, ist.

4. Verfahren nach Anspruch 1, bei dem der Bandbreitenwert nach der Formel (N_{K} × D) × A berechnet wird, wobei
- N_{K} die Anzahl der für ein Service registrierten Nutzern ist,
- D die für den Service benötigte Bandbreite ist,
- A ein Reduktionsfaktor ist.

5. Verfahren nach Anspruch 3, bei dem der Reduktionsfaktor in Abhängigkeit der zu erwartenden Anzahl von Nutzern gebildet wird.

6. Verfahren nach einem der vorhergehenden Ansprüche, bei dem die Netzresource Netzwerklinks umfasst.

7. Verfahren nach einem der vorhergehenden Ansprüche, bei dem die Netzresource Netzwerkelemente umfasst.

8. Verfahren nach einem der vorhergehenden Ansprüche, bei dem der Bandbreitenwert für mehrere zusammenhängende Netzresourcen einzeln ermittelt und bereitgestellt wird.

9. Verfahren nach einem der vorhergehenden Ansprüche, bei dem die Netzresource einem VLAN zugeordnet ist.
